# EUROPEAN PATENT APPLICATION

(11) **EP 4 574 564 A1**
(43) Date of publication of application: **25.06.2025**
(21) Application number: 22955926.5
(22) Date of filing: 22.08.2022
(51) Int. Cl.: B60N 2/75

(54) **VEHICLE SEAT ADJUSTING METHOD AND APPARATUS**

(71) Applicant: Shenzhen Yinwang Intelligent Technologies Co., Ltd., Shenzhen, Guangdong 518129 (CN)
(72) Inventor: XU, Hao, Shenzhen, Guangdong 518129 (CN); SUN, Jian, Shenzhen, Guangdong 518129 (CN); LI, Jinming, Shenzhen, Guangdong 518129 (CN); DING, Zhenwen, Shenzhen, Guangdong 518129 (CN); LI, Qingmeng, Shenzhen, Guangdong 518129 (CN)
(74) Representative: Thun, Clemens
(86) International application number: PCT/CN2022/113876
(87) International publication number: WO 2024/040375

(57) **Abstract**

A vehicle seat adjustment method and apparatus are provided. The vehicle seat adjustment method includes: A first armrest stays in a retracted state in a second mode, and a vehicle seat is reclined to enter a first mode with a gravity-free reclining posture and the first armrest is adjusted to a preset height only when a first instruction is received.

## Description

### TECHNICAL FIELD

This application relates to the field of vehicle technologies, and in particular, to a vehicle seat adjustment method and apparatus.

### BACKGROUND

With increasing popularity of vehicle consumption and people's increasingly high requirements on ride comfort, an issue of vehicle ride comfort becomes increasingly important, and ride comfort can effectively improve ride experience of passengers. A development trend of seats evolves from ordinary seats to comfortable sitting seats, queen-sized seats, to large-space comfortable reclining seats. The large-space comfortable reclining seats (such as zero-gravity reclining seats) are a market development trend in the future. Zero-gravity reclining seats can desirably fit human body curves, supporting a one-touch zero-gravity mode or customizable adjustment, thereby making operations more user-friendly.

Currently, a zero-gravity reclining seat with an armrest is more comfortable, but the waist is likely to get stuck in a seat with the armrest, affecting user experience.

### SUMMARY

This application provides a vehicle seat adjustment method and apparatus, to improve use experience of a passenger

A first aspect of this application provides a vehicle seat adjustment method, including: receiving a first instruction, where the first instruction instructs to adjust a vehicle seat to enter a first mode, and the first mode means a zero-gravity reclining posture of the vehicle seat; and reclining the vehicle seat according to the first instruction, and adjusting a first armrest of the vehicle seat to a preset height, where the first armrest is in a retracted state when the vehicle seat is in a second mode.

In the foregoing aspect, the first armrest of the vehicle seat is retracted in the second mode. After taking the vehicle seat, a passenger may deliver a first instruction. When receiving the first instruction instructing entering the first mode, a vehicle-mounted device adjusts the vehicle seat to a reclining posture, that is, reclines a backrest, lifts a cushion and a leg rest, and lifts the first armrest of the vehicle seat. Because the first armrest is in the retracted state before the passenger takes the seat, it can be avoided that the waist is likely to get stuck when the passenger gets on or off a vehicle, and passenger experience is improved.

In a possible implementation, after the adjusting the vehicle seat according to the first instruction, the method further includes: receiving a second instruction, where the instruction instructs to adjust the vehicle seat to enter the second mode; and reducing a reclining degree of the vehicle seat according to the second instruction, and retracting the first armrest, where a reclining degree of the vehicle seat in the second mode is less than a reclining degree of the vehicle seat in the first mode.

In the foregoing possible implementation, when the passenger taking the vehicle seat in the first mode wants to change to a sitting posture or does not need to take the vehicle seat, the passenger may send the second instruction to the vehicle-mounted device, and instruct the vehicle to adjust the vehicle seat to the second mode with a sitting posture by using the second instruction, where the reclining degree of the vehicle seat in the second mode is less than the reclining degree of the vehicle seat in the first mode, and the first armrest extending in the first mode is re-retracted. When the first armrest is a door-side armrest, the door-side armrest that is retracted in the second mode does not occupy a deployment position of an airbag outside the vehicle seat, thereby improving vehicle safety and protecting life of a passenger or a user.

In a possible implementation, the method further includes: translating the vehicle seat and moving the vehicle seat backward.

In the foregoing possible implementation, due to limited space of the vehicle, before the vehicle seat is reclined, the vehicle seat needs to be translated and moved backward, to provide reclining space, provide more comfortable ride space for a passenger, and improve comfort.

In a possible implementation, the first armrest is located behind the vehicle seat in the second mode.

In the foregoing possible implementation, the first armrest may be moved to the back of the backrest through a sliding track, to conceal the first armrest, improving aesthetics of the vehicle seat.

In a possible implementation, the vehicle seat further includes a second armrest, and the second armrest is at the preset height in the first mode.

In the foregoing possible implementation, two armrests are at a same height, to improve ride comfort of a passenger.

In a possible implementation, the second armrest is an electric armrest, and the second armrest is in the retracted state when the vehicle seat is in the second mode.

In the foregoing possible implementation, for a dual-armrest vehicle seat, armrests on two sides are both electric armrests, so that a problem that the waist is likely to get stuck in the two armrests can be avoided, and use experience of a passenger is improved.

In a possible implementation, the second armrest is an aisle-side armrest. The aisle-side armrest is a fixed armrest, and the fixed armrest includes a cup holder and a charging interface.

In the foregoing possible implementation, a cup holder and a charging interface may be disposed on the fixed armrest, to facilitate a passenger to place cups and charge an electric appliance.

A second aspect of this application provides a vehicle seat adjustment apparatus. The vehicle seat adjustment apparatus may implement the method in any one of the first aspect or the possible implementations of the first aspect. The apparatus includes a corresponding unit or module configured to perform the foregoing method. The unit or module included in the apparatus may be implemented by software and/or hardware. For example, the apparatus may be a network device, or may be a chip, a chip system, a processor, or the like that supports the network device in implementing the foregoing method, or may be a logic module or software that can implement all or some functions of the network device.

A third aspect of this application provides a computer device, including a processor. The processor is coupled to a memory, the memory is configured to store instructions, and when the instructions are executed by the processor, the computer device is enabled to implement the method in any one of the first aspect or the possible implementations of the first aspect. For example, the computer device may be a network device, or may be a chip, a chip system, or the like that supports the network device in implementing the foregoing method.

A fourth aspect of this application provides a computer-readable storage medium. The computer-readable storage medium stores instructions. When the instructions are executed by a processor, the method in any one of the first aspect or the possible implementations of the first aspect are implemented.

A fifth aspect of this application provides a vehicle. The vehicle includes the vehicle seat adjustment apparatus in the second aspect.

### BRIEF DESCRIPTION OF DRAWINGS

FIG. 1 is a diagram of an architecture of a seat adjustment system according to an embodiment of this application;
FIG. 2 is a flowchart of a vehicle seat adjustment method according to an embodiment of this application;
FIG. 3 is a diagram of retracting an armrest according to an embodiment of this application;
FIG. 4 is a diagram of concealing an armrest according to an embodiment of this application;
FIG. 5 is a diagram of a control logic of a vehicle seat according to an embodiment of this application;
FIG. 6 is a diagram of a structure of a vehicle seat adjustment apparatus according to an embodiment of this application;
FIG. 7 is a diagram of a structure of a computer device according to an embodiment of this application; and
FIG. 8 is a diagram of a structure of a vehicle according to an embodiment of this application.

### DESCRIPTION OF EMBODIMENTS

Embodiments of this application provide a vehicle seat adjustment method and apparatus, to improve use experience of a passenger.

The following describes embodiments of this application with reference to the accompanying drawings. It is clear that the described embodiments are merely some rather than all of embodiments of this application. A person of ordinary skill in the art may know that with development of technologies and emergence of a new scenario, the technical solutions provided in embodiments of this application are also applicable to similar technical problems.

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include" and "contain" and any other variants are intended to cover the non-exclusive inclusion. For example, a process, method, system, product, or device that includes a list of steps or units is not necessarily limited to those expressly listed steps or units, but may include other steps or units not expressly listed or inherent to the process, method, product, or device.

The following explains some terms in embodiments of this application.

Zero-gravity reclining posture: allows a passenger to present an almost lying riding posture through large-angle seat adjustment (backrest moving backward) and a retractable leg rest, provides good body support, and allows the spine to be naturally relaxed. In this posture, a whole body of a human is most relaxed, and load generated by the human body is the smallest. The passenger will not be tired even if the passenger maintains this posture for a long time. Sitting on a zero-gravity vehicle seat can fully support the chest, lumbar spine and pelvis, reducing strain on muscles and vertebrae.

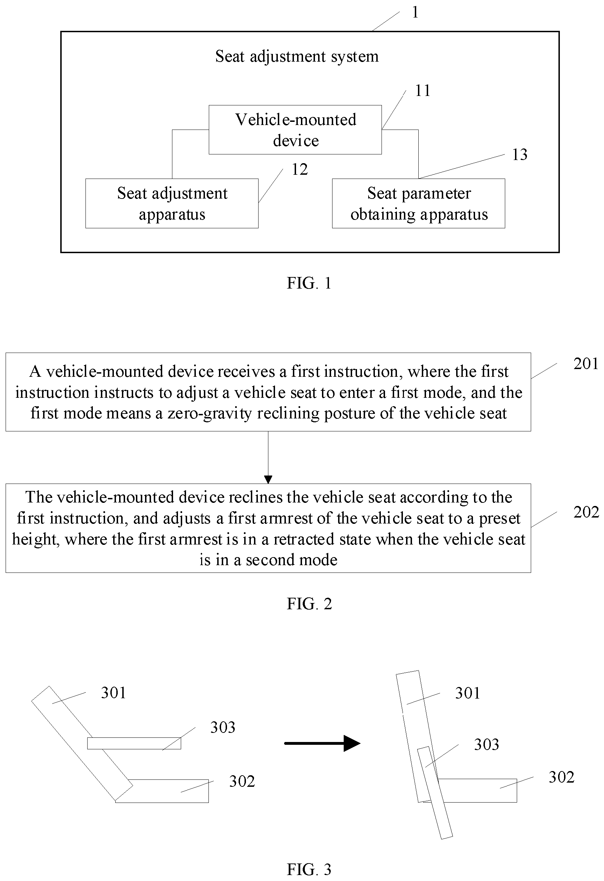

First, FIG. 1 is a diagram of an architecture of a seat adjustment system according to an embodiment of this application. As shown in FIG. 1, the seat adjustment system 1 includes a vehicle-mounted device 11, a seat adjustment apparatus 12, and a seat parameter obtaining apparatus 13. The vehicle-mounted device 11 communicates with the seat adjustment apparatus 12 and the seat parameter obtaining apparatus 13, and the vehicle-mounted device 11 may receive an instruction of a user to control the seat adjustment apparatus 12 and the seat parameter obtaining apparatus 13. In addition, the vehicle-mounted device 11 may be, for example, a chip.

The seat adjustment apparatus 12 is configured to adjust a seat based on a seat parameter transmitted by the vehicle-mounted device 11. The seat parameter obtaining apparatus 13 is configured to feed back a changed seat parameter when detecting a change of a seat parameter. It may be understood that the seat parameter obtaining apparatus may be a sensor in a plurality of forms.

With increasing popularity of vehicle consumption and people's increasingly high requirements on ride comfort, an issue of vehicle ride comfort becomes increasingly important, and ride comfort can effectively improve ride experience of passengers. A development trend of seats evolves from ordinary seats to comfortable sitting seats, queen-sized seats, to large-space comfortable reclining seats. The large-space comfortable reclining seats (such as zero-gravity reclining seats) are a market development trend in the future. Zero-gravity reclining seats can desirably fit human body curves, supporting a one-touch zero-gravity mode or customizable adjustment, thereby making operations more user-friendly.

Adding armrests to the zero-gravity reclining seat may further improve human comfort. Currently, a zero-gravity reclining seat with a single armrest includes an aisle-side armrest or a door-side armrest. However, the waist is likely to get stuck in a seat with an armrest, affecting user experience.

To resolve the foregoing problems, an embodiment of this application provides a vehicle seat adjustment method. The method is described as follows.

FIG. 2 is a flowchart of a vehicle seat adjustment method according to an embodiment of this application. The method includes the following steps.

Step 201: A vehicle-mounted device receives a first instruction, where the first instruction instructs to adjust a vehicle seat to enter a first mode, and the first mode means a zero-gravity reclining posture of the vehicle seat.

In this embodiment, when a passenger does not use the vehicle seat or before the passenger delivers the first instruction, the vehicle seat is in a common sitting posture. When the passenger needs to use the vehicle seat, the passenger may input the first instruction to the vehicle-mounted device, and the first instruction instructs a vehicle to adjust the vehicle seat to the first mode with the zero-gravity reclining posture. The first mode implements a specific posture mode similar to that of a relaxed human body without external force being applied in a zero-gravity environment. After receiving the first instruction, the vehicle-mounted device controls a seat adjustment apparatus to execute the first instruction. The first instruction may be input through a button on the seat, or may be input through a control panel of a driver's cab. This is not limited herein. The vehicle seat in this embodiment of this application may be a front-row driver seat, or may be a rear-row seat. This is not limited in this embodiment of this application.

Step 202: The vehicle-mounted device reclines the vehicle seat according to the first instruction, and adjusts a first armrest of the vehicle seat to a preset height, where the first armrest is in a retracted state when the vehicle seat is in a second mode.

In this embodiment, after receiving the first instruction, the vehicle-mounted device may adjust the vehicle seat to the first mode according to the first instruction, that is, recline the vehicle seat, so that the vehicle seat is presented in a zero-gravity reclining posture, and then adjust the first armrest that is in the retracted state in the second mode to the preset height, to provide the passenger with more comfort. The second mode means a normal sitting posture of a vehicle seat. The first armrest may be an aisle-side armrest or a door-side armrest. This is not limited herein. The first armrest is an electric armrest, and the electric armrest includes an armrest rotating structure, a motor, and a transmission structure of the electric armrest, and is controlled by the seat adjustment apparatus.

A manner of the reclining may be: adjusting a reclining angle of a cushion to a specific angle, an angle of a backrest to a specific angle, and an angle of a leg rest to a specific angle, so as to implement a specific posture mode similar to that of a relaxed human body without external force being applied in a zero-gravity environment. An angle between the cushion and the backrest may be in a range of 110 degrees to 130 degrees, and an angle of 120 degrees is used as an optimal angle. An angle between the cushion and the leg rest may be in a range of 113 degrees to 127 degrees, and an angle of 120 degrees is also used as an optimal angle. Certainly, a specific angle may be set as required.

When the passenger taking the vehicle seat in the first mode wants to change to a sitting posture or does not need to take the vehicle seat, the passenger may send a second instruction to the vehicle-mounted device, and instruct the vehicle to adjust the vehicle seat to the second mode with a sitting posture by using the second instruction, where a reclining degree of the vehicle seat in the second mode is less than a reclining degree of the vehicle seat in the first mode, and the first armrest extending in the first mode is re-retracted. When the first armrest is a door-side armrest, the door-side armrest that is retracted in the second mode does not occupy a deployment position of an airbag outside the vehicle seat, so that a problem that the door-side armrest currently cannot pass a test of the China Insurance Research Institute can be resolved.

A manner of retracting the first armrest may be: rotating the first armrest clockwise by a rotating wheel at a joint on a side edge of the backrest until the first armrest leans against the side edge of the backrest, or rotating the first armrest counter-clockwise by a rotating wheel at a joint on a side edge of the backrest until the first armrest leans against the side edge of the backrest, or moving the first armrest based on any one of the foregoing manners, to the back of the backrest by using a sliding track to conceal the first armrest, or another manner of retracting the first armrest. This is not limited in this embodiment of this application. A manner in which the seat adjustment apparatus adjusts the vehicle seat may be that the vehicle-mounted device controls the seat adjustment apparatus to enable the seat adjustment apparatus to adjust angles between the backrest, the cushion, and the leg rest of the vehicle seat to angles of the vehicle seat in a normal sitting posture. Due to limited space of the vehicle, before the vehicle seat is reclined, the vehicle seat needs to be translated and moved backward, to provide reclining space. For example, the vehicle seat may be translationally slid by 90 mm, and moved backward by 140 mm. This is not limited herein.

The foregoing describes only a single-armrest scenario. The vehicle seat may further include a second armrest. To improve comfort of a passenger, in the first mode, both the first armrest and the second armrest of the vehicle seat are at the preset height, and the preset height may be set as required. When the second armrest is also an electric armrest, the second armrest is also in the retracted state when the vehicle seat is in the second mode. For a manner of retracting the second armrest, refer to related descriptions of retracting the first armrest. Details are not described herein. When the second armrest is also an electric armrest, the passenger may further deliver an instruction to fine-tune heights of the first armrest and the second armrest, so as to further improve comfort of the passenger.

When the second armrest is an aisle-side armrest, the aisle-side armrest may be a manual armrest, and the passenger adjusts the manual armrest to the preset height in the first mode. The aisle-side armrest may alternatively be a fixed armrest, that is, an armrest fixed at a preset height. The fixed armrest may be provided with a cup holder and a charging interface. The cup holder may be attached to the aisle-side armrest. Alternatively, the cup holder may be disposed in the armrest, and a cover is used to conceal the cup holder, that is, a cup holder and a charging interface are disposed in an opening of the armrest, and then a detachable cover is configured to seal the opening. During use, a passenger may move the cover, and then use the cup holder and the charging interface in the armrest. A specific structure is not limited in this application.

For example, the first armrest is a door-side armrest. If the first armrest rotates clockwise by a rotating wheel at a joint on a side edge of the backrest until the first armrest leans against the side edge of the backrest, and the second armrest is a fixed armrest, refer to a diagram of retracting an armrest shown in FIG. 3. A vehicle seat in FIG. 3 includes a backrest 301, a cushion 302, an armrest 303, and a leg rest (not shown in the figure). In FIG. 3, the left side is a vehicle seat in a first mode, and the right side is the vehicle seat in a second mode. The retracted armrest 303 is located on a side edge of the backrest, and does not affect a passenger getting on or off the vehicle seat.

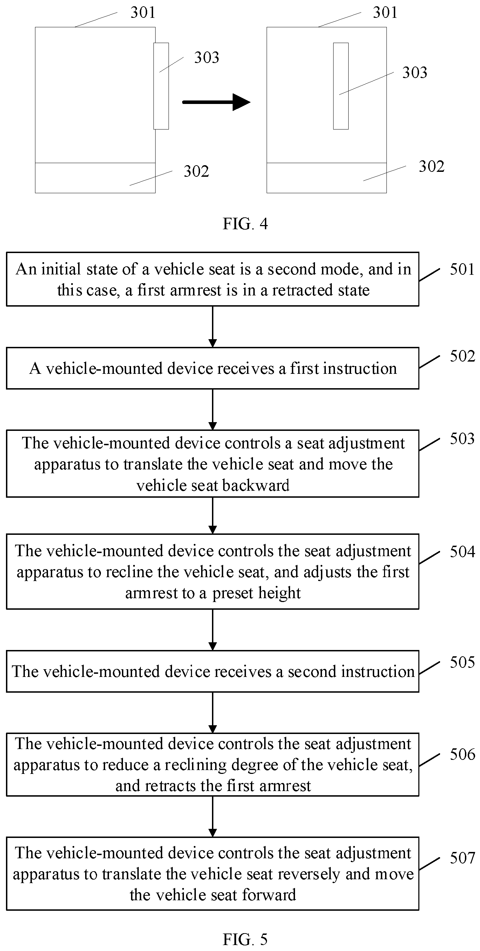

If the armrest needs to conceal the first armrest, for example, the armrest rotates counter-clockwise by a rotating wheel at a joint on a side edge of the backrest until the armrest leans against the side edge of the backrest, refer to a diagram of concealing an armrest shown in FIG. 4. The vehicle seat also includes a backrest 301, a cushion 302, an armrest 303, and a leg rest (not shown in the figure). In FIG. 4, an armrest on the left side rotates counter-clockwise until the armrest leans against the side edge of the backrest. In this way, the armrest may be controlled to move to the back of the backrest, to form a diagram shown on the right side of FIG. 4, thereby improving aesthetics of the vehicle seat.

Specifically, for a diagram of a control logic of the vehicle seat in this embodiment of this application, refer to FIG. 5. Step 501: An initial state of the vehicle seat is a second mode, and in this case, a first armrest is in a retracted state. Step 502: A vehicle-mounted device receives a first instruction. Step 503: The vehicle-mounted device controls a seat adjustment apparatus to translate the vehicle seat and move the vehicle seat backward. Step 504: The vehicle-mounted device controls the seat adjustment apparatus to recline the vehicle seat, and adjusts the first armrest to a preset height. Step 505: The vehicle-mounted device receives a second instruction. Step 506: The vehicle-mounted device controls the seat adjustment apparatus to reduce a reclining degree of the vehicle seat, and retracts the first armrest. Step 507: The vehicle-mounted device controls the seat adjustment apparatus to translate the vehicle seat reversely and move the vehicle seat forward. If a passenger does not need to use a first mode at the beginning, the vehicle seat is always in the second mode.

In this embodiment of this application, a first armrest of a vehicle seat is retracted in a second mode. After taking the vehicle seat, a passenger may deliver a first instruction. When receiving the first instruction instructing entering a first mode, a vehicle-mounted device adjusts the vehicle seat to a reclining posture, that is, reclines a backrest, lifts a cushion and a leg rest, and lifts the first armrest of the vehicle seat. Because the first armrest is in a retracted state before the passenger takes the seat, it can be avoided that the waist is likely to get stuck when the passenger gets on or off a vehicle, and passenger experience is improved.

The foregoing describes the vehicle seat adjustment method, and the following describes an apparatus for performing the method.

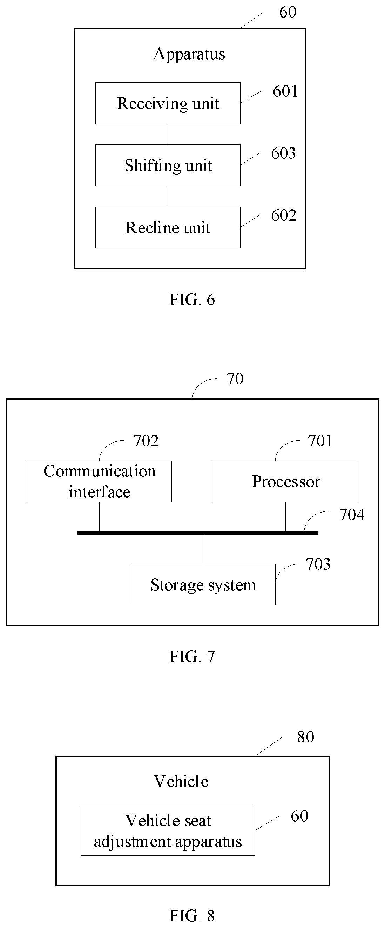

FIG. 6 is a diagram of a structure of a vehicle seat adjustment apparatus according to an embodiment of this application. The apparatus 60 includes the following units.

A receiving unit 601 is configured to receive a first instruction, where the first instruction instructs to adjust a vehicle seat to enter a first mode, and the first mode means a zero-gravity reclining posture of the vehicle seat.

A recline unit 602 is configured to recline the vehicle seat according to the first instruction, and adjust a first armrest of the vehicle seat to a preset height, where the first armrest is in a retracted state when the vehicle seat is in a second mode.

The receiving unit 601 is configured to perform step 201 in the method embodiment in FIG. 2, and the recline unit 602 is configured to perform step 202 in the method embodiment in FIG. 2. Details are not described herein.

Optionally, the receiving unit 601 is further configured to receive a second instruction, where the instruction instructs to adjust the vehicle seat to enter the second mode.

The recline unit 602 is further configured to: reduce a reclining degree of the vehicle seat according to the second instruction, and retract the first armrest, where a reclining degree of the vehicle seat in the second mode is less than a reclining degree of the vehicle seat in the first mode.

Optionally, the apparatus 60 further includes a shifting unit 603, where the shifting unit 603 is specifically configured to translate the vehicle seat and move the vehicle seat backward.

Optionally, the first armrest is located behind the vehicle seat in the second mode.

Optionally, the vehicle seat further includes a second armrest, and the second armrest is at the preset height in the first mode.

Optionally, the second armrest is an electric armrest, and the second armrest is in the retracted state when the vehicle seat is in the second mode.

Optionally, the second armrest is an aisle-side armrest. The aisle-side armrest is a fixed armrest, and the fixed armrest includes a cup holder and a charging interface.

FIG. 7 is a diagram of a possible logical structure of a computer device 70 according to an embodiment of this application. The computer device 70 includes a processor 701, a communication interface 702, a storage system 703, and a bus 704. The processor 701, the communication interface 702, and the storage system 703 are connected to each other through the bus 704. In this embodiment of this application, the processor 701 is configured to control and manage actions of the computer device 70. For example, the processor 701 is configured to perform the steps performed by the vehicle-mounted device in the method embodiment in FIG. 2. The communication interface 702 is configured to support the computer device 70 in performing communication. The storage system 703 is configured to store program code and data of the computer device 70.

The processor 701 may be a central processing unit, a general-purpose processor, a digital signal processor, an application-specific integrated circuit, a field programmable gate array or another programmable logic device, a transistor logic device, a hardware component, or any combination thereof. The processor 701 may implement or execute various example logical blocks, modules, and circuits described with reference to content disclosed in this application. Alternatively, the processor 701 may be a combination for implementing a computing function, for example, a combination of one or more microprocessors, or a combination of a digital signal processor and a microprocessor. The bus 704 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one thick line is used to represent the bus in FIG. 4, but this does not mean that there is only one bus or only one type of bus.

The receiving unit 601 in the apparatus 60 is equivalent to the communication interface 702 in the computer device 70. The recline unit 602 and the shifting unit 603 in the apparatus 60 are equivalent to the processor 701 in the computer device 70.

The computer device 70 in this embodiment may correspond to the vehicle-mounted device in the method embodiment in FIG. 2. The communication interface 702 in the computer device 70 may implement functions and/or various steps implemented by the vehicle-mounted device in the method embodiment in FIG. 2. For brevity, details are not described herein.

FIG. 8 is a diagram of a possible structure of a vehicle 80 according to an embodiment of this application. The vehicle 80 may include the vehicle seat adjustment apparatus 60 shown in FIG. 6.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, the unit in any one of the foregoing apparatuses may be one or more integrated circuits configured to implement the foregoing method, for example, one or more application-specific integrated circuits (application-specific integrated circuits, ASICs), or one or more microprocessors (digital signal processors, DSPs), or one or more field programmable gate arrays (field programmable gate arrays, FPGAs), or a combination of at least two of these integrated circuit forms. For another example, when the unit in the apparatus may be implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

Another embodiment of this application further provides a computer-readable storage medium. The computer-readable storage medium stores computer-executable instructions. When a processor of a device executes the computer-executable instructions, the device performs the method performed by the vehicle-mounted device in the foregoing method embodiment.

It may be clearly understood by a person skilled in the art that, for convenient and brief description, for a detailed working process of the foregoing system, apparatus, and unit, reference may be made to a corresponding process in the foregoing method embodiments. Details are not described herein.

In the several embodiments provided in this application, it should be understood that the disclosed system, apparatus, and method may be implemented in other manners. For example, the described apparatus embodiments are merely examples. For example, the division of units is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A vehicle seat adjustment method, comprising:
receiving a first instruction, wherein the first instruction instructs to adjust a vehicle seat to enter a first mode, and the first mode means a zero-gravity reclining posture of the vehicle seat; and
reclining the vehicle seat according to the first instruction, and adjusting a first armrest of the vehicle seat to a preset height, wherein the first armrest is in a retracted state when the vehicle seat is in a second mode.

2. The method according to claim 1, wherein after the adjusting the vehicle seat according to the first instruction, the method further comprises:
receiving a second instruction, wherein the instruction instructs to adjust the vehicle seat to enter the second mode; and
reducing a reclining degree of the vehicle seat according to the second instruction, and retracting the first armrest, wherein a reclining degree of the vehicle seat in the second mode is less than a reclining degree of the vehicle seat in the first mode.

3. The method according to claim 1 or 2, wherein the method further comprises:
translating the vehicle seat and moving the vehicle seat backward.

4. The method according to any one of claims 1 to 3, wherein the first armrest is located behind the vehicle seat in the second mode.

5. The method according to any one of claims 1 to 4, wherein the vehicle seat further comprises a second armrest, and the second armrest is at the preset height in the first mode.

6. The method according to claim 5, wherein the second armrest is an electric armrest, and the second armrest is in the retracted state when the vehicle seat is in the second mode.

7. The method according to claim 5, wherein the second armrest is an aisle-side armrest, the aisle-side armrest is a fixed armrest, and the fixed armrest comprises a cup holder and a charging interface.

8. A vehicle seat adjustment apparatus, comprising:
a receiving unit, configured to receive a first instruction, wherein the first instruction instructs to adjust a vehicle seat to enter a first mode, and the first mode means a zero-gravity reclining posture of the vehicle seat; and
a recline unit, configured to recline the vehicle seat according to the first instruction, and adjust a first armrest of the vehicle seat to a preset height, wherein the first armrest is in a retracted state when the vehicle seat is in a second mode.

9. The apparatus according to claim 8, wherein the receiving unit is further configured to:
receive a second instruction, wherein the instruction instructs to adjust the vehicle seat to enter the second mode; and
the recline unit is further configured to:
reduce a reclining degree of the vehicle seat according to the second instruction, and retract the first armrest, wherein a reclining degree of the vehicle seat in the second mode is less than a reclining degree of the vehicle seat in the first mode.

10. The apparatus according to claim 8 or 9, wherein the apparatus further comprises a shifting unit, and the shifting unit is specifically configured to:
translate the vehicle seat and move the vehicle seat backward.

11. The apparatus according to any one of claims 8 to 10, wherein the first armrest is located behind the vehicle seat in the second mode.

12. The apparatus according to any one of claims 8 to 11, wherein the vehicle seat further comprises a second armrest, and the second armrest is at the preset height in the first mode.

13. The apparatus according to claim 12, wherein the second armrest is an electric armrest, and the second armrest is in the retracted state when the vehicle seat is in the second mode.

14. The apparatus according to claim 12, wherein the second armrest is an aisle-side armrest, the aisle-side armrest is a fixed armrest, and the fixed armrest comprises a cup holder and a charging interface.

15. A computer device, comprising a processor, wherein the processor is coupled to a memory; and
the processor is configured to execute instructions stored in the memory, to enable the computer device to perform the method according to any one of claims 1 to 7.

16. A computer-readable storage medium, wherein the computer-readable storage medium stores instructions, and when the instructions are executed by a processor, the method according to any one of claims 1 to 7 is implemented.

17. A vehicle, wherein the vehicle comprises the apparatus according to any one of claims 8 to 14.
